(19) Europäisches Patentamt
European Patent Office
Office européen des brevets

(11) EP 3 503 380 B1

(12) FASCICULE DE BREVET EUROPEEN

(45) Date de publication et mention
de la délivrance du brevet:
16.02.2022 Bulletin 2022/07

(21) Numéro de dépôt: 18206896.5

(22) Date de dépôt: 19.11.2018

(51) Classification Internationale des Brevets (IPC):
H02P 6/20 (2016.01)          H02P 6/08 (2016.01)

(52) Classification Coopérative des Brevets (CPC):
H02P 6/08; H02P 6/20

(54) **PROCÉDÉ DE COMMANDE D'UN MOTEUR ÉLECTRIQUE INCLUANT UNE SÉQUENCE D'IDENTIFICATION D'UN TRANSFORMATEUR**

STEUERVERFAHREN EINES ELEKTROMOTORS, DAS EINE IDENTIFIZIERUNGSSEQUENZ EINES TRANSFORMATORS UMFASST

METHOD FOR CONTROLLING AN ELECTRIC MOTOR INCLUDING AN IDENTIFICATION SEQUENCE OF A TRANSFORMER

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: 19.12.2017 FR 1762421

(43) Date de publication de la demande:
26.06.2019 Bulletin 2019/26

(73) Titulaire: Schneider Toshiba Inverter Europe SAS
27120 Pacy sur Eure (FR)

(72) Inventeurs:
• DEVOS, Thomas
  78955 Carrières sous Poissy (FR)
• JEBAI, Al Kassem
  27120 Vernon (FR)
• MALRAIT, François
  27120 Jouy sur Eure (FR)

(74) Mandataire: Mouney, Jérôme et al
Schneider Electric Industries SAS
Service Propriété Industrielle
35 rue Joseph Monier - CS30323
92506 Rueil Malmaison Cedex (FR)

(56) Documents cités:
EP-A1- 2 963 802     US-A1- 2015 002 059

## Description

### Domaine technique de l'invention

La présente invention se rapporte à un procédé de commande d'un moteur électrique mis en oeuvre dans un variateur de vitesse. L'invention concerne également un système de commande d'un moteur électrique.

### Etat de la technique

Dans certaines applications, un transformateur est présent entre la sortie d'un variateur de vitesse et le moteur électrique commandé par le variateur. Il s'agit en particulier des applications pour la commande des pompes de type ESP (pompe submersible) pour lesquelles un moteur moyenne tension est souvent utilisé. Dans ce cas, si le variateur de vitesse utilisé est en basse tension, un transformateur rehausseur est nécessaire en sortie du variateur.

Actuellement, dans une configuration de ce type où le moteur électrique est à induction ou de type synchrone à aimant permanent, une procédure de démarrage spécifique telle que celle décrite dans la demande de brevet EP2963802A1, consiste à appliquer en entrée une trajectoire de courant prédéfinie et une trajectoire de fréquence prédéfinie en vue de permettre l'accrochage du rotor. Cette séquence de démarrage fonctionne très bien lorsque l'inertie de l'application commandée par le moteur électrique n'est pas très élevée.

Dans le cas d'une inertie importante, le couple accélérateur doit être pris en compte dans le calcul de la référence de courant ou du temps de la rampe d'accélération. Néanmoins, cela n'est pas suffisant pour garantir un démarrage propre. A basse fréquence statorique, le gain du transformateur est très faible et le courant au secondaire ne permet donc pas de générer suffisamment de couple pour accrocher le moteur. A partir d'une certaine fréquence statorique, le courant peut devenir suffisant pour démarrer le moteur, mais ne permet pas de stabiliser la vitesse réelle du moteur. Des oscillations de vitesse et de couple sont alors présentes.

Une solution consiste à augmenter le seuil de courant de référence appliqué en entrée afin que le rotor soit accroché à une vitesse plus faible et que le niveau de courant stabilise le moteur. Cependant, dans ce cas, le courant appliqué en fin de trajectoire de démarrage devient très important ce qui peut entraîner une détérioration du moteur électrique connecté au secondaire du transformateur ou du transformateur lui-même.

De manière générale, garantir le démarrage dans toutes les conditions (faible ou forte inertie) nécessite d'ajouter des capteurs de courant côté moteur pour réguler le courant au secondaire du transformateur et de prévoir une solution de régulation spécifique dans le variateur de vitesse pour tenir compte des données en provenance de ces capteurs.

La demande de brevet US2015/002059 décrit une solution de contrôle d'un moteur électrique connecté à un variateur de vitesse à travers un transformateur.

Le but de l'invention est donc de proposer un procédé de commande d'un moteur électrique connecté à un variateur de vitesse via un transformateur, ledit procédé permettant le démarrage du moteur électrique en créant un minimum d'oscillations de vitesse et de couple, en limitant le niveau de courant appliqué pour ne pas détériorer le moteur électrique et en évitant l'ajout de capteurs côté moteur.

### Exposé de l'invention

Ce but est atteint par un procédé de commande d'un moteur électrique, mis en œuvre dans un variateur de vitesse, ledit variateur de vitesse étant connecté au moteur électrique à travers un transformateur qui comporte un primaire et un secondaire, ledit primaire du transformateur étant connecté à des phases de sortie du variateur de vitesse et ledit secondaire du transformateur étant connecté audit moteur électrique, ledit procédé consistant à :

- Exécuter une séquence d'identification du transformateur pour déterminer des données de gain représentatives d'un transfert réalisé par le transformateur ;
- Générer un module de transfert à partir desdites données de gain déterminées ;
- Déterminer une séquence de démarrage du moteur électrique à mettre en œuvre par le variateur de vitesse en exécutant ledit module de transfert sur une trajectoire de courant de référence.
- Une génération d'un profil de tension comprenant une fréquence variable de manière à définir plusieurs points de fonctionnement en fréquence successifs ;
- Pour chaque point de fonctionnement en fréquence, une première mesure du courant et/ou de la tension au primaire du transformateur et une deuxième mesure respectivement du courant et/ou de la tension au secondaire du transformateur ;
- Une détermination du gain entre le primaire et le secondaire du transformateur pour chaque point de fonctionnement en fréquence.

Selon une particularité, le profil de tension comporte une amplitude fixe ou une amplitude variable, obtenue par une boucle de régulation de courant.

Selon une autre particularité, les points de fonctionnement en fréquence peuvent être définis chacun par un palier en fréquence distinct d'un profil de fréquence présentant plusieurs paliers successifs ou peuvent être définis chacun sur une rampe de variation linéaire en fréquence.

Selon une autre particularité, la génération du module de transfert consiste à déterminer une fonction inverse de la fonction de transfert du transformateur ou à créer une table de correspondance.

Selon une particularité, ladite séquence d'identification est exécutée pour déterminer également des données de déphasage représentatives du transfert réalisé par le transformateur.

L'invention concerne également un système de commande d'un moteur électrique, ledit moteur électrique étant commandé par un variateur de vitesse, ledit variateur de vitesse étant connecté au moteur électrique à travers un transformateur qui comporte un primaire et un secondaire, ledit primaire du transformateur étant connecté à des phases de sortie du variateur de vitesse et ledit secondaire du transformateur étant connecté audit moteur électrique, ledit système de commande comportant une unité de traitement et de commande ainsi que :

- Un module d'identification du transformateur configuré pour être exécuté par l'unité de traitement et de commande pour déterminer des données de gain représentatives d'un transfert réalisé par le transformateur ;
- Un module d'analyse configuré pour générer un module de transfert à partir desdites données de gain et de déphasage déterminées ;
- Ledit module de transfert étant configuré pour être exécuté sur une trajectoire de courant de référence pour déterminer une séquence de démarrage du moteur électrique à mettre en œuvre par le variateur de vitesse.

Le module d'identification comporte un module de génération d'un profil de tension comprenant une fréquence variable de manière à définir plusieurs points de fonctionnement en fréquence successifs.

Le système comporte un premier module d'acquisition, pour chaque point de fonctionnement en fréquence, pour une mesure du courant et/ou de la tension au primaire du transformateur et un deuxième module d'acquisition respectivement du courant et/ou de la tension au secondaire du transformateur.

Le module d'analyse est configuré pour déterminer un gain et un déphasage entre le primaire et le secondaire du transformateur pour chaque point de fonctionnement en fréquence.

Selon une autre particularité, le module de transfert comporte une fonction inverse de ladite fonction de transfert du transformateur ou une table de correspondance.

Selon une autre particularité, le module d'identification est configuré pour déterminer également des données de déphasage représentatives du transfert réalisé par le transformateur.

**Brève description des figures**

D'autres caractéristiques et avantages vont apparaître dans la description détaillée qui suit faite en regard des dessins annexés dans lesquels :

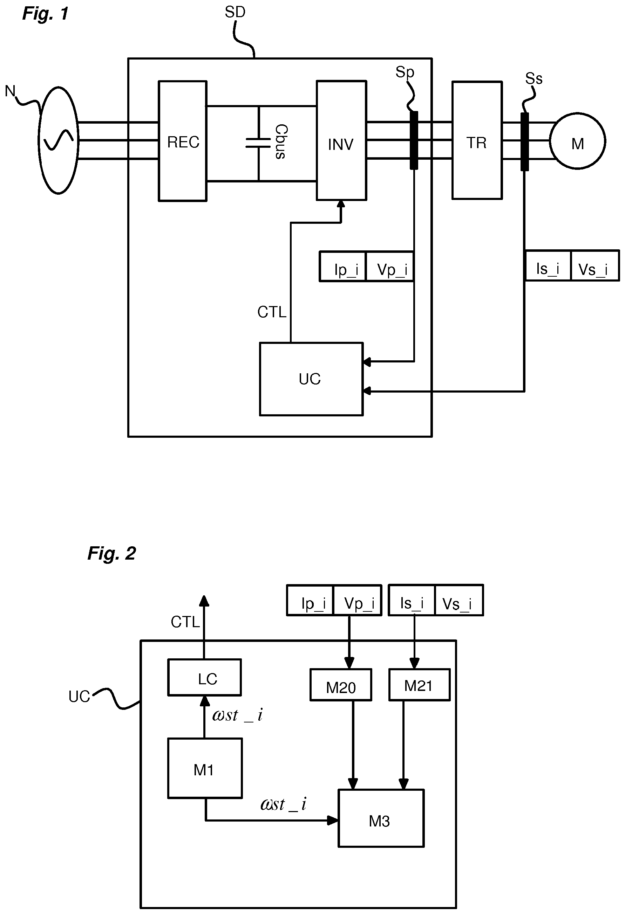

- La figure 1 représente de manière schématique une installation de commande d'un moteur électrique, incluant le système de commande de l'invention ;
- La figure 2 illustre de manière schématique le principe de fonctionnement du système de commande de l'invention ;
- Les figures 3A et 3B illustrent, selon deux variantes de réalisation, le principe de la séquence d'identification mise en œuvre dans l'invention ;
- La figure 4 illustre de manière schématique le principe de génération du module de transfert employé dans le système de commande de l'invention ;
- La figure 5 illustre de manière schématique le principe de fonctionnement de la séquence de démarrage mise en œuvre par le système de commande de l'invention ;
- Les figures 6A et 6B représentent deux exemples de profils suivis par la fréquence pour la mise en œuvre du procédé d'identification de l'invention ;
- Les figures 7A et 7B illustrent le principe d'une séquence de démarrage classique ;
- Les figures 8A et 8B illustrent le principe d'une séquence de démarrage modifiée par la solution de l'invention.

**Description détaillée d'au moins un mode de réalisation**

L'invention s'applique pour une installation de commande d'un moteur électrique, qui comporte :

- Un variateur de vitesse SD destiné à commander le moteur électrique M et comprenant notamment un étage onduleur INV destiné à convertir une tension continue en une tension variable à appliquer au moteur électrique M ; Le variateur de vitesse 1 est ici représenté triphasé ;

- Un transformateur TR connecté sur les phases de sortie (trois phases, référencées 1, 2, 3) du variateur SD. Le transformateur TR comporte un primaire (indice p) auquel sont connectées les phases de sortie du variateur de vitesse SD et un secondaire (indice s) ;

- Un moteur électrique M connecté au secondaire du transformateur TR ; Le moteur électrique M peut être de tout type, synchrone ou asynchrone, le procédé de l'invention étant indépendant du type de moteur connecté.

Le variateur de vitesse SD comporte une unité de traitement et de commande UC destinée à mettre en œuvre une loi de commande LC permettant de déterminer, en tenant compte par exemple d'une consigne de vitesse en entrée, les tensions à appliquer au moteur électrique M lors du fonctionnement normal du moteur et les ordres de commande CTL à appliquer à l'étage onduleur INV pour obtenir ces tensions de sortie.

Le variateur de vitesse peut comporter un étage redresseur REC en entrée, destiné à convertir une tension alternative fournie par le réseau électrique N en une tension continue. Il peut également comporter un bus continu d'alimentation connecté d'une part à l'étage redresseur REC et d'autre part à l'étage onduleur INV. Le bus continu d'alimentation peut comporter deux lignes d'alimentation reliées entre elles par au moins un condensateur de bus Cbus configuré pour stabiliser la tension du bus.

L'invention vise à proposer un procédé de commande permettant de déterminer au final la séquence de démarrage adaptée à l'installation. Pour cela, le procédé de commande vise notamment à mettre en œuvre une séquence d'identification du transformateur TR qui est intercalé entre le variateur de vitesse SD et le moteur électrique M lorsque ce transformateur TR a été considéré comme nécessaire pour la mise en œuvre de l'application.

Par identification du transformateur TR, on entend la détermination du gain et/ou du déphasage généré par le transformateur TR entre le primaire et le secondaire du transformateur, en fonction de la fréquence statorique d'excitation ωst générée par le variateur de vitesse à destination du moteur électrique M placé en aval du transformateur TR. A partir des données recueillies, il sera possible de déterminer une fonction de transfert pour relier la fréquence statorique d'excitation ωst appliquée en entrée aux courants et tension présents au primaire et au secondaire du transformateur. La fonction de transfert obtenue devra ensuite être inversée pour être employée dans la séquence de démarrage. De manière générale, on pourra parler du transfert réalisé par le transformateur entre le primaire et le secondaire, ce transfert étant réalisé par l'application d'un gain et/ou d'un déphasage.

Autrement dit, il s'agit de déterminer un diagramme de Bode du transformateur. De manière connue, un diagramme de Bode est un moyen de représenter le comportement fréquentiel d'un système (ici le transformateur). Il peut être utilisé pour visualiser rapidement la marge de gain et la marge de phase d'un système.

Le procédé de commande est mis en œuvre par un système de commande adapté.

Le système de commande comporte une unité de traitement et de commande qui comporte au moins un microcontrôleur. Cette unité de de traitement et de commande UC peut être celle du variateur de vitesse. Le système de commande peut inclure le variateur de vitesse.

La séquence d'identification du transformateur est avantageusement mise en œuvre en dehors du fonctionnement normal de l'installation. Elle peut être mise en œuvre lors d'une première mise sous tension ou lors d'une étape de paramétrage particulière.

De manière connue, le variateur de vitesse SD, plus particulièrement son étage onduleur, est commandé pour appliquer une tension triphasée sur les trois phases de sortie, dont la fréquence et l'amplitude peuvent varier. Classiquement, la loi de commande LC se base sur un courant de référence Iref. A partir du courant de référence et des mesures ou estimations du courant, la loi de commande LC détermine la tension de référence Vref à partir de laquelle sont déterminées des tensions simples V1_ref, V2_ref, V3_ref à obtenir sur chaque phase de sortie. L'unité de traitement et de commande UC détermine ensuite les ordres de commande à appliquer aux transistors de l'étage onduleur pour obtenir les tensions souhaitées.

Les tensions V1_ref, V2_ref, V3_ref sont de la forme :

$$V1\_ref = V \sin(2\,\pi f\,t)$$

$$V2\_ref = V \sin\left(2\,\pi f\,t - \frac{2\pi}{3}\right)$$

$$V3\_ref = V \sin\left(2\,\pi f\,t - \frac{4\pi}{3}\right)$$

Dans la suite de la description, nous expliquerons le principe de l'invention en se basant sur les modules de courant et les modules de tension, résultant respectivement des courants et des tensions sur les trois phases de l'installation. Mais il faut comprendre que le principe peut être appliqué de manière identique en se basant sur les courants et les tensions pris sur chaque phase.

Le système de commande comporte un module d'identification M1 du transformateur, configuré pour être exécuté par l'unité de traitement et de commande UC en vue de mettre en œuvre la séquence d'identification.

Le module d'identification M1 comporte un module M10 d'application d'un profil en fréquence, configuré pour être exécuté par l'unité de traitement et de commande UC.

Le profil de fréquence statorique comporte plusieurs points de fonctionnement en fréquence ωst_i distincts successifs appliqués en fonction du temps. Chaque point de fonctionnement en fréquence est défini par un indice i, avec i allant de 1 à n.

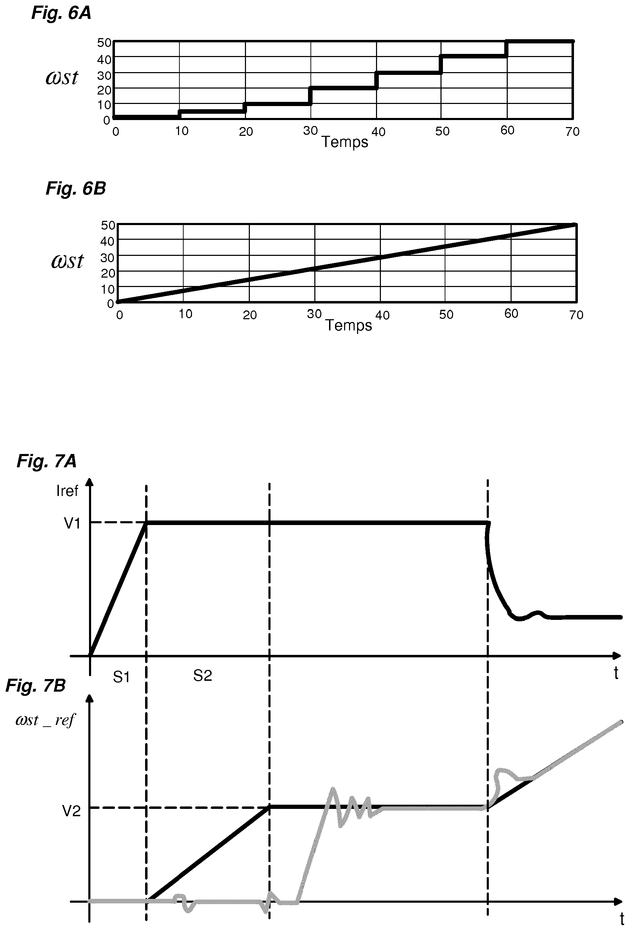

Lors de la séquence d'identification, l'amplitude de la tension déterminée par la loi de commande LC est pour sa part choisie de manière adaptée pour ne pas saturer le transformateur, ni détériorer le moteur électrique. Les points de fonctionnement en fréquence ωst_i sont avantageusement distincts, mais il n'est nullement nécessaire qu'ils suivent un profil particulier. Il faut comprendre donc que tout profil de variation de la fréquence, permettant de définir plusieurs points de fonctionnement en fréquence distincts pourrait être envisagé. A titre d'exemple, deux configurations sont présentées ci-dessous sur les figures 6A et 6B.

Une première configuration représentée sur la figure 6A comporte plusieurs paliers successifs, chaque palier formant un point de fonctionnement en fréquence ωst_i distinct. Le profil peut être croissant comme sur la figure 6A, ou décroissant.

Une deuxième configuration représentée sur la figure 6B, comporte une rampe linéaire. Les points de fonctionnement en fréquence successifs appartiennent donc à cette rampe. La rampe peut être croissante comme sur la figure 6B, ou décroissante.

En ce qui concerne le contrôle de la tension de sortie (résultant des trois tensions triphasées) en amplitude V, plusieurs variantes peuvent être envisagées.

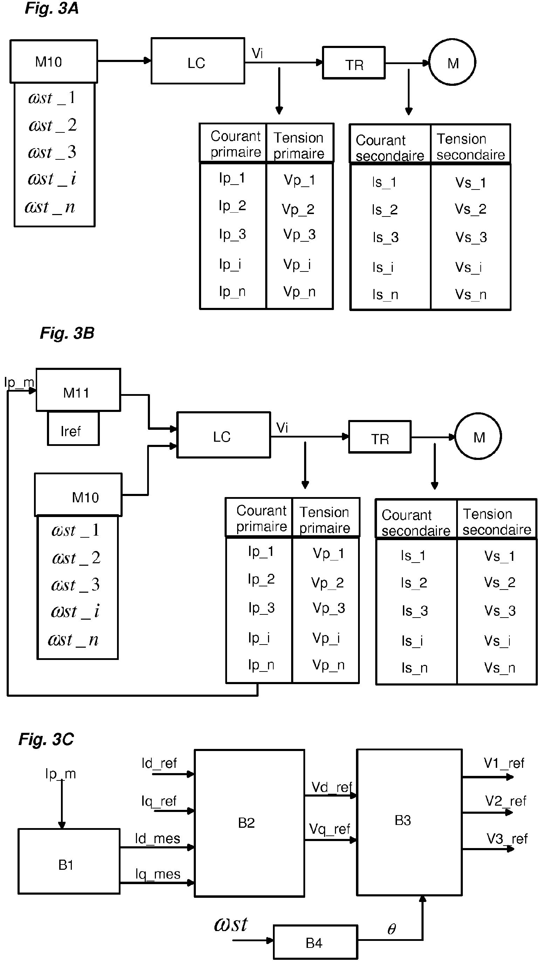

Dans une première variante représentée sur la figure 3A, l'amplitude Vi de la tension restera identique pour chaque point de fonctionnement en fréquence i. Le schéma consiste donc simplement à injecter le profil de fréquence dans la loi de commande LC.

Dans une deuxième variante de réalisation illustrée sur la figure 3B, en considérant simplement le module de la tension, celui-ci peut être déterminé par une régulation de courant. Le module d'identification M1 comporte alors un module d'application M11 d'une référence de courant Iref dans la loi de commande LC, ce module M11 étant exécuté en parallèle du module M10. Le module de la tension Vi est déterminé par un régulateur à action proportionnel-intégral recevant en entrée la différence entre le courant de référence Iref et le courant Ip_m mesuré au primaire du transformateur. Dans ce cadre et de manière plus concrète, la régulation peut suivre le schéma tel que représenté sur la figure 3C. Dans ce schéma, les courants mesurés sur les trois phases de sortie (Ip_m), connectées au primaire du transformateur sont transformés, grâce à une transformation de Park en deux courants Id et Iq dans le repère d,q. Un contrôleur à action proportionnelle-intégrale reçoit en entrée les deux courants mesurés Id, Iq ainsi qu'une référence Idref et une référence Iqref. En sortie, on obtient les deux tensions de référence Vdref et Vqref. Un module appliquant une transformée de Park permet de convertir ces deux tensions de référence en trois tensions d'amplitude Vi à appliquer aux trois phases de sortie. Ce module reçoit également en entrée un angle de déphasage issu de la fréquence statorique appliquée selon un profil défini, tel que par exemple l'un de ceux décrits ci-dessous. Dans cette régulation, on peut choisir la référence Idref égale au module du courant et la référence Iqref à une valeur nulle.

La séquence d'identification consiste ensuite à acquérir, pour chaque point de fonctionnement ωst_i en fréquence, le courant Ip_i et/ou la tension Vp_i au primaire du transformateur et respectivement le courant Is_i et/ou la tension Vs_i au secondaire du transformateur. Autrement dit, lorsque le courant Ip_i est acquis au primaire, le courant is_i au secondaire doit être acquis. De même, lorsque la tension Vp_i est acquise au primaire, la tension Vs_i au secondaire doit être acquise. Le système peut aussi se baser à la fois sur les courants au primaire et au secondaire et sur les tensions au primaire et au secondaire pour définir la fonction de transfert du transformateur TR mais il faut comprendre qu'une seule des grandeurs (courant ou tension) suffit. Dans la suite de la description, on parlera d'acquisition en courant et/ou tension et il faut comprendre que l'acquisition du courant et/ou de la tension au primaire du transformateur implique forcément de manière respective l'acquisition du courant et/ou de la tension au secondaire.

Le système de commande comporte des premiers moyens d'acquisition du courant et/ou de la tension au primaire du transformateur et des seconds moyens d'acquisition du courant et/ou de la tension au secondaire du transformateur.

Les premiers moyens d'acquisition peuvent comporter des capteurs Sp de mesure de courant et/ou de tension placés au primaire du transformateur TR.

Les seconds moyens d'acquisition peuvent comporter des capteurs Ss de mesure de courant et/ou de tension placés au secondaire du transformateur TR.

Les premiers moyens d'acquisition peuvent comporter un premier module d'acquisition M20 exécuté par l'unité de traitement et de commande UC pour acquérir les données de courant Ip_i et/ou les données de tension Vp_i mesurées au primaire du transformateur pour chaque point de fonctionnement en fréquence ωst_i.

Les seconds moyens d'acquisition peuvent comporter un deuxième module d'acquisition M21 exécuté par l'unité de traitement et de commande UC pour acquérir de manière respective les données de courant Is_i et/ou les données de tension Vs_i mesurées au secondaire du transformateur TR pour chaque point de fonctionnement en fréquence ωst_i.

Le premier module d'acquisition M20 et le deuxième module d'acquisition M21 sont connectés à chaque capteur de mesure en vue de récupérer les données de mesure de courant et/ou les données de mesure de tension.

Le premier module d'acquisition et le deuxième module d'acquisition sont synchronisés de manière à faire coïncider à chaque instant d'acquisition, les données de courant acquises au primaire avec les données de courant acquises au secondaire du transformateur pour chaque point de fonctionnement en fréquence.

Le premier module d'acquisition et le deuxième module d'acquisition sont synchronisés de manière à faire coïncider en temps, les données de tension acquises au primaire avec les données de tension acquises au secondaire du transformateur pour chaque point de fonctionnement en fréquence.

Les premiers moyens d'acquisition peuvent être ceux déjà employés par le variateur de vitesse SD pour mettre en œuvre sa loi de commande LC du moteur électrique.

Les seconds moyens d'acquisition peuvent comporter une carte électronique externe connectée à l'unité de traitement et de commande UC.

Les capteurs de courant et/ou de tension placés au secondaire du transformateur ainsi que la carte électronique externe peuvent être employés uniquement pour la mise en œuvre de la séquence d'identification et retirés par la suite lors du démarrage du moteur électrique et lors du fonctionnement normal de l'installation.

Pour chaque point de fonctionnement en fréquence, le module d'identification M1 lance une étape d'acquisition des données de courant et/ou de tension par l'exécution du premier module d'acquisition M20 et du deuxième module d'acquisition M21 définis ci-dessus.

A l'issue de l'étape d'acquisition, l'unité de traitement et de commande UC dispose ainsi d'une table de données mettant en correspondance chaque valeur de fréquence statorique de référence et une valeur de courant Ip_i et/ou de tension Vp_i au primaire et une valeur de courant Is_i et/ou de tension Vs_i au secondaire.

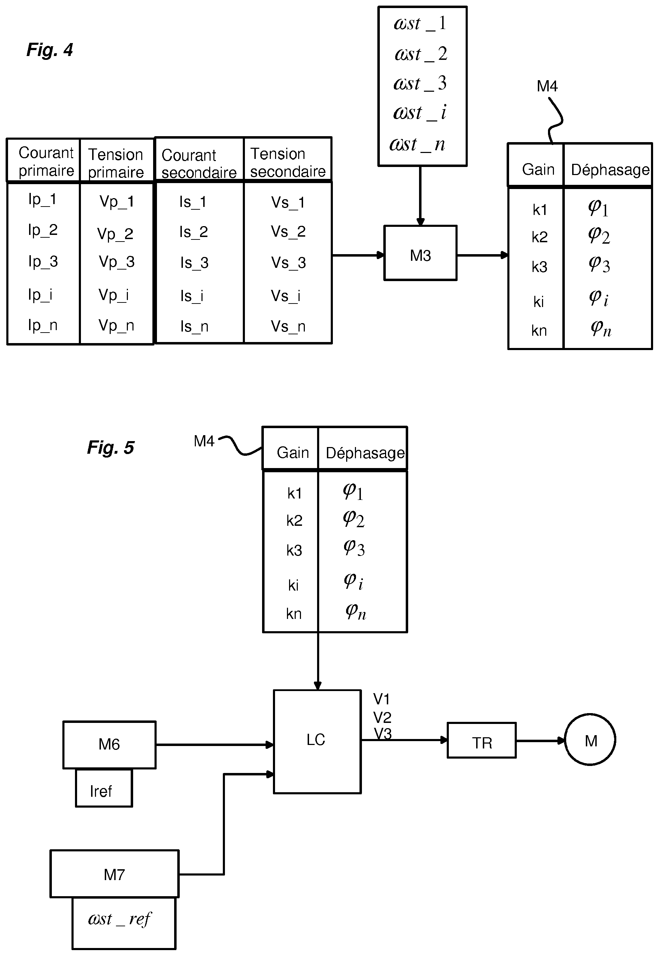

A partir de ces données, l'unité de traitement et de commande UC exécute un module d'analyse M3 des données en courant et/ou en tension acquises au primaire et au secondaire pour chaque point de fonctionnement en fréquence ωst_i afin de déterminer pour chaque point de fonctionnement en fréquence un gain ki et/ou un déphasage φi, représentatifs d'un transfert en courant et/ou tension réalisé par le transformateur. Ces données représentent plus précisément l'inverse de la fonction de transfert (gain et/ou déphasage) du transformateur. Ces données sont enregistrées par l'unité de traitement et de commande UC dans ses moyens de mémorisation. Le principe est illustré par la figure 4 annexée.

Le module d'analyse M3 est ensuite configuré pour générer un module de transfert M4 destiné à être exécuté par l'unité de traitement et de commande UC et configuré pour assurer le transfert d'un courant et/ou d'une tension à appliquer au primaire du transformateur en un courant et/ou une tension présente au secondaire, en tenant compte de la fréquence statorique et des valeurs de gain et/ou de déphasage mémorisés à l'issue de la séquence d'identification.

Ce module de transfert M4 est employé pour créer une séquence de démarrage spécifique du moteur électrique. Le module de transfert peut se présenter sous différentes formes :

- Il peut s'agir d'une table de correspondance entre les différentes données, à laquelle l'unité de traitement et de commande peut se référer lors de la génération d'une séquence de démarrage d'un moteur électrique ;

- Il peut s'agir de la fonction inverse du transfert du transformateur pour l'appliquer lors de la séquence de démarrage.

Si on ne considère que le gain du transformateur, la fonction de transfert prend la forme d'une fonction G(ωst)=Gain transformateur. La fonction inverse correspondra ainsi à k=1/G(ωst).

Le module de transfert M4 peut être exécuté :

- En ligne pendant le déroulement d'une séquence de démarrage du moteur électrique, chaque courant de référence de la trajectoire étant corrigé par le module de transfert, ou

- Hors ligne, c'est-à-dire préalablement à une séquence de démarrage du moteur électrique, pour calculer dans sa totalité une nouvelle séquence de démarrage qui sera mémorisée et employée à chaque nouveau démarrage du moteur électrique.

Ce module de transfert M4 permet de générer la trajectoire de courant de référence qui est adaptée pour démarrer le moteur électrique, tout en protégeant le moteur électrique et le transformateur.

En référence aux figures 7A et 7B, une séquence de démarrage classique et connue d'un moteur électrique, telle que décrite dans la demande de brevet EP2963802A1, incorporée ici par référence, comporte les étapes principales suivantes :

Dans une première étape, la séquence de démarrage consiste à déterminer et appliquer un courant de référence Iref (module M6). Ce courant de référence Iref est choisi à une valeur supérieure à une première valeur seuil, correspondant au minimum de courant à appliquer pour faire tourner le moteur électrique synchrone, c'est-à-dire correspondant au minimum du courant de charge. La figure 7A représente la trajectoire du courant de référence Iref appliqué en entrée. Sur cette figure 7A, on peut voir une rampe de montée en courant jusqu'à une valeur V1 qui est choisie supérieure à ladite première valeur seuil (S1). Le courant de référence Iref est ensuite maintenue à la valeur V1 (S2). Préférentiellement, comme représenté sur la figure 7A, la valeur V1 atteinte est choisie constante et le courant est maintenu à cette valeur pendant toute la séquence de démarrage.

Dans une deuxième étape, l'unité de commande UC applique une trajectoire de fréquence statorique ωst_ref (module M7). La fréquence statorique ωst_ref est choisie à une valeur la plus basse possible mais supérieure à une deuxième valeur seuil, synonyme de saturation du transformateur, comme expliqué par la démonstration ci-dessus. La figure 7B représente la trajectoire de la fréquence statorique ωst_ref appliquée en entrée. Sur la figure 7B, la courbe grise représente la fréquence du rotor et donc la vitesse réelle du moteur électrique. Sur cette figure 7B, on peut voir que la fréquence statorique ωst_ref est d'abord choisie nulle lors de la rampe de montée du courant puis elle suit une rampe de montée une fois que le courant de référence Iref a atteint sa valeur constante. Ensuite la fréquence statorique ωst_ref est préférentiellement stabilisée à sa valeur constante V2 choisie. Elle est stabilisée à cette valeur V2 jusqu'à la fin de la séquence de démarrage.

Comme lors du démarrage du moteur le rotor n'est pas aligné, la fréquence réelle du rotor ne suit pas la fréquence statorique ωst_ref (figure 7B). L'unité de commande maintient alors la commande en courant et en fréquence pendant un temps défini (temps au moins supérieur à l'inverse de la fréquence statorique) afin de garantir la rotation du moteur (donc que la vitesse moteur soit égale à la vitesse de référence).

Une fois le rotor accroché, l'unité de commande connaît la fréquence du moteur, celle-ci étant égale à la fréquence de la tension délivrée par le variateur de vitesse, ainsi qu'une estimation de l'angle θ du rotor.

L'unité de commande commute alors la commande du moteur électrique synchrone vers la loi de commande principale LC.

Cette séquence de démarrage classique est mise en œuvre en tenant compte d'un gain fixe pour le transformateur. Le module de transfert déterminé par le procédé de commande décrit ci-dessus permet de corriger cette séquence de démarrage afin de l'adapter à l'installation et notamment aux caractéristiques réelles de gain et/ou de déphasage engendrées par la présence du transformateur.

Comme déjà décrit ci-dessus, cette séquence de démarrage classique peut s'avérer inefficace en cas d'inertie importante au niveau du moteur électrique.

Le module de transfert M4 déterminé ci-dessus permet donc de corriger la séquence.

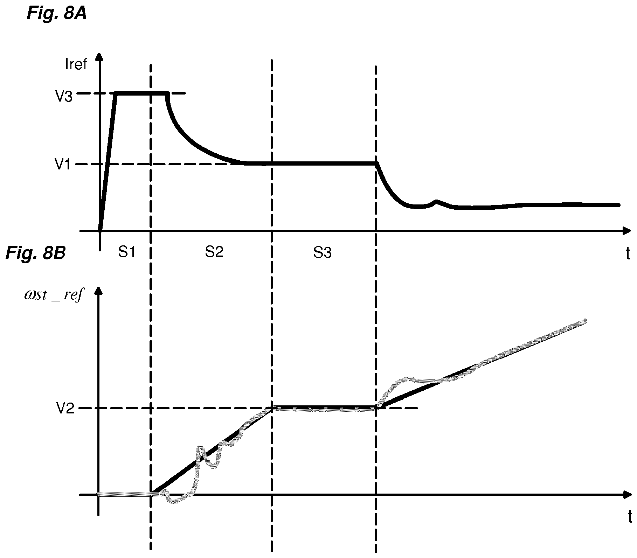

Les figures 8A et 8B illustrent ainsi la nouvelle séquence de démarrage d'un moteur électrique obtenue après application du module de transfert M4 déterminé préalablement. On peut voir sur ces figures que le courant de référence Iref suit une trajectoire différente de la trajectoire classique, celle-ci ayant été modifiée par le module de transfert M4 pour tenir compte des caractéristiques du transformateur connecté sur la sortie et déjà identifié. Pour déterminer cette nouvelle trajectoire, le module de transfert M4 est configuré pour :

- Recevoir en entrée chaque valeur de courant Iref de la trajectoire de courant classique ;

- Appliquer à chaque valeur de courant Iref reçue un transfert en tenant compte d'un gain ki et/ou d'un déphasage φi ;

- Générer (en ligne ou hors-ligne) la nouvelle trajectoire de courant de référence.

Pendant l'application de la nouvelle trajectoire de courant, la trajectoire de fréquence reste identique à celle de la séquence classique.

Sur la figure 8A, on peut voir que le courant suit une trajectoire qui comporte une première rampe allant jusqu'à une valeur V3 correspondant à la valeur maximale du courant au primaire afin de protéger le variateur et le transformateur. Cette valeur est supérieure à la valeur V1 définie précédemment. Le courant reste donc égal à la valeur V3 tant que le module de transfert M4 génère une référence de courant supérieure à la valeur V3. Le courant suit ensuite une courbe descendante pour atteindre la valeur V1. Elle comporte alors un palier à la valeur V1.

Sur la figure 8B, la courbe grise représente la fréquence du rotor et donc la vitesse réelle du moteur électrique. On peut voir que la nouvelle trajectoire de courant appliquée permet de faire en sorte de faire converger la vitesse réelle vers la vitesse de référence.

On comprend que la solution de l'invention présente de nombreux avantages, parmi lesquels :

- L'identification des caractéristiques du transformateur permet de corriger la séquence de démarrage, assurant ainsi le démarrage du moteur électrique quel que soit le niveau d'inertie ;

- La séquence d'identification est simple à mettre en œuvre et automatique ;

- Le procédé de commande peut s'adapter à l'application connectée sur la sortie du variateur de vitesse ;

- La solution proposée évite l'ajout de capteurs supplémentaires côté moteur lors de la commande du moteur électrique ; L'ajout de capteurs supplémentaires est nécessaire uniquement lors de la séquence d'identification du transformateur.

**Revendications**

1. Procédé de commande d'un moteur électrique (M), mis en œuvre dans un variateur de vitesse (SD), ledit variateur de vitesse (SD) étant connecté au moteur électrique à travers un transformateur (TR) qui comporte un primaire et un secondaire, ledit primaire du transformateur étant connecté à des phases de sortie du variateur de vitesse et ledit secondaire du transformateur étant connecté audit moteur électrique, consistant à :

    - Exécuter une séquence d'identification du transformateur (TR) pour déterminer au moins des données de gain (ki) représentatives d'un transfert réalisé par le transformateur (TR) ;
    - Générer un module de transfert (M4) à partir desdites données de gain déterminées ;
    - Déterminer une séquence de démarrage du moteur électrique (M) à mettre en œuvre par le variateur de vitesse (SD) en exécutant ledit module de transfert (M4) sur une trajectoire de courant de référence,

    **caractérisé en ce que** ladite séquence d'identification comporte :

- Une génération d'un profil de tension comprenant une fréquence variable de manière à définir plusieurs points de fonctionnement en fréquence ($\omega$st_i) successifs ;
- Pour chaque point de fonctionnement en fréquence ($\omega$st_i), une première mesure du courant (Ip_i) et/ou de la tension (Vp_i) au primaire du transformateur et une deuxième mesure respectivement du courant (Is_i) et/ou de la tension (Vs_i) au secondaire du transformateur ;
- Une détermination du gain entre le primaire et le secondaire du transformateur pour chaque point de fonctionnement en fréquence.

2. Procédé selon la revendication 1, **caractérisé en ce que** le profil de tension comporte une amplitude fixe.

3. Procédé selon la revendication 1, **caractérisé en ce que** le profil de tension comporte une amplitude variable, obtenue par une boucle de régulation de courant.

4. Procédé selon l'une des revendications 1 à 3, **caractérisé en ce que** les points de fonctionnement en fréquence ($\omega$st_i) sont définis chacun par un palier en fréquence distinct d'un profil de fréquence présentant plusieurs paliers successifs.

5. Procédé selon l'une des revendications 1 à 3, **caractérisé en ce que** les points de fonctionnement en fréquence ($\omega$st_i) sont définis chacun sur une rampe de variation linéaire en fréquence.

6. Procédé selon l'une des revendications 1 à 5, **caractérisé en ce que** la génération du module de transfert (M4) consiste à déterminer une fonction inverse d'une fonction de transfert du transformateur ou à créer une table de correspondance.

7. Procédé selon l'une des revendications 1 à 6, **caractérisé en ce que** ladite séquence d'identification est exécutée pour déterminer également des données de déphasage ($\varphi$i) représentatives du transfert réalisé par le transformateur.

8. Système de commande d'un moteur électrique, ledit moteur électrique étant commandé par un variateur de vitesse, ledit variateur de vitesse étant connecté au moteur électrique à travers un transformateur qui comporte un primaire et un secondaire, ledit primaire du transformateur étant connecté à des phases de sortie du variateur de vitesse et ledit secondaire du transformateur étant connecté audit moteur électrique, ledit système de commande comportant une unité de traitement et de commande (UC) et comportant en outre :

- Un module d'identification (M1) du transformateur configuré pour être exécuté par l'unité de traitement et de commande (UC) pour déterminer des données de gain (ki) représentatives d'un transfert réalisé par le transformateur ;
- Un module d'analyse (M3) configuré pour générer un module de transfert (M4) à partir desdites données de gain (ki) déterminées ;
- Ledit module de transfert (M4) étant configuré pour être exécuté sur une trajectoire de courant de référence pour déterminer une séquence de démarrage du moteur électrique à mettre en œuvre par le variateur de vitesse **caractérisé en ce que** le module d'identification (M1) comporte en outre :

un module de génération d'un profil de tension comprenant une fréquence variable de manière à définir plusieurs points de fonctionnement en fréquence ($\omega$st_i) successifs.

un premier module d'acquisition (M20), pour chaque point de fonctionnement en fréquence, pour une mesure du courant et/ou de la tension au primaire du transformateur et un deuxième module d'acquisition (M21) respectivement pour une mesure du courant et/ou de la tension au secondaire du transformateur,

le module d'analyse (M3) étant configuré pour déterminer un gain (ki) entre le primaire et le secondaire du transformateur pour chaque point de fonctionnement en fréquence.

9. Système selon la revendication 8, **caractérisé en ce que** le profil de tension comporte une amplitude fixe.

10. Système selon la revendication 8, **caractérisé en ce que** le profil de tension comporte une amplitude variable, obtenue par une boucle de régulation de courant.

11. Système selon l'une des revendications 8 à 10, **caractérisé en ce que** les points de fonctionnement en fréquence ($\omega$st_i) sont définis chacun par un palier en fréquence distinct d'un profil de fréquence présentant plusieurs paliers successifs.

12. Système selon l'une des revendications 8 à 11, **caractérisé en ce que** les points de fonctionnement en fréquence ($\omega$st_i) sont définis chacun sur une rampe de variation linéaire en fréquence.

13. Système selon l'une des revendications 8 à 12, **caractérisé en ce que** le module de transfert comporte une fonction de transfert ou une table de correspon-

**14.** Système selon l'une des revendications 8 à 13, **caractérisé en ce que** le module d'identification est configuré pour déterminer également des données de déphasage (φi) représentatives du transfert réalisé par le transformateur.

**Patentansprüche**

**1.** Steuerungsverfahren eines Elektromotors (M), das in einem Umrichter (SD) eingesetzt wird, wobei der Umrichter (SD) über einen Transformator (TR) mit dem Elektromotor verbunden ist, der eine Primärwicklung und eine Sekundärwicklung aufweist, wobei die Primärwicklung des Transformators mit Ausgangsphasen des Umrichters und die Sekundärwicklung des Transformators mit dem Elektromotor verbunden ist, das in Folgendem besteht:

- Ausführen einer Identifikationssequenz des Transformators (TR), um zumindest Verstärkungsdaten (ki) zu bestimmen, die für einen Transfer repräsentativ sind, der vom Transformator (TR) durchgeführt wird;
- Erzeugen eines Transfermoduls (M4) anhand der bestimmten Verstärkungsdaten;
- Bestimmen einer Startsequenz des Elektromotors (M), die vom Umrichter (SD) durchzuführen ist, durch Ausführung des Transfermoduls (M4) auf einer Referenzstrombahn,

**dadurch gekennzeichnet, dass** die Identifikationssequenz Folgendes aufweist

- Ein Erzeugen eines Spannungsprofils mit einer variablen Frequenz, um mehrere aufeinanderfolgende Frequenzbetriebspunkte ($\omega$st_i) festzulegen;
- Für jeden Frequenzbetriebspunkt ($\omega$st_i) eine erste Messung des Stroms (Ip_i) und/oder der Spannung (Vp_i) an der Primärwicklung des Transformators beziehungsweise eine zweite Messung des Stroms (Is_i) und/oder der Spannung (Vs_i) an der Sekundärwicklung des Transformators;
- Ein Bestimmen der Verstärkung zwischen der Primärwicklung und der Sekundärwicklung des Transformators für jeden Frequenzbetriebspunkt.

**2.** Verfahren nach Anspruch 1, **dadurch gekennzeichnet, dass** das Spannungsprofil eine feste Amplitude aufweist.

**3.** Verfahren nach Anspruch 1, **dadurch gekennzeichnet, dass** das Spannungsprofil eine variable Amplitude aufweist, die durch eine Stromregelschleife erhalten wird.

**4.** Verfahren nach einem der Ansprüche 1 bis 3, **dadurch gekennzeichnet, dass** die Frequenzbetriebspunkte ($\omega$st_i) jeweils von einer gesonderten Frequenzstufe eines Frequenzprofils mit mehreren aufeinanderfolgenden Stufen definiert sind.

**5.** Verfahren nach einem der Ansprüche 1 bis 3, **dadurch gekennzeichnet, dass** die Frequenzbetriebspunkte ($\omega$st_i) jeweils auf einer linearen Frequenzvariationsrampe definiert sind.

**6.** Verfahren nach einem der Ansprüche 1 bis 5, **dadurch gekennzeichnet, dass** das Erzeugen des Transfermoduls (M4) darin besteht, eine Umkehrfunktion einer Transferfunktion des Transformators zu bestimmen oder eine Zuordnungstabelle zu erzeugen.

**7.** Verfahren nach einem der Ansprüche 1 bis 6, **dadurch gekennzeichnet, dass** die Identifikationssequenz ausgeführt wird, um auch Phasenverschiebungsdaten (φi) zu bestimmen, die für den Transfer repräsentativ sind, der vom Transformator durchführt wird.

**8.** Steuerungssystem eines Elektromotors, wobei der Elektromotor von einem Umrichter gesteuert wird, wobei der Umrichter über einen Transformator mit dem Elektromotor verbunden ist, der eine Primärwicklung und eine Sekundärwicklung aufweist, wobei die Primärwicklung des Transformators mit Ausgangsphasen des Umrichters und die Sekundärwicklung des Transformators mit dem Elektromotor verbunden ist, wobei das Steuerungssystem eine Verarbeitungs- und Steuerungseinheit (UC) aufweist und ferner Folgendes aufweist:

- Ein Identifikationsmodul (M1) des Transformators, das dazu ausgebildet ist, von der Verarbeitungs- und Steuerungseinheit (UC) ausgeführt zu werden, um Verstärkungsdaten (ki) zu bestimmen, die für einen Transfer repräsentativ sind, der vom Transformator durchführt wird;
- Ein Analysemodul (M3), das dazu ausgebildet ist, ein Transfermodul (M4) anhand der bestimmten Verstärkungsdaten (ki) zu erzeugen;
- Wobei das Transfermodul (M4) dazu ausgebildet ist, auf einer Referenzstrombahn ausgeführt zu werden, um eine Startsequenz des Elektromotors zu bestimmen, die vom Umrichter durchzuführen ist, **dadurch gekennzeichnet, dass** das Identifikationsmodul (M1) ferner Folgendes aufweist:

ein Modul zum Erzeugen eines Spannungsprofils mit einer variablen Frequenz, um mehrere aufeinanderfolgende Frequenzbetriebspunkte ($\omega$st_i) festzulegen.

ein erstes Erfassungsmodul (M20) für jeden Frequenzbetriebspunkt, für eine Messung des Stroms und/oder der Spannung an der Primärwicklung des Transformators beziehungsweise ein zweites Erfassungsmodul (M21) für eine Messung des Stroms und/oder der Spannung an der Sekundärwicklung des Transformators,

wobei das Analysemodul (M3) dazu ausgebildet ist, eine Verstärkung (ki) zwischen der Primärwicklung und der Sekundärwicklung des Transformators für jeden Frequenzbetriebspunkt zu bestimmen.

9. System nach Anspruch 8, **dadurch gekennzeichnet, dass** das Spannungsprofil eine feste Amplitude aufweist.

10. System nach Anspruch 8, **dadurch gekennzeichnet, dass** das Spannungsprofil eine variable Amplitude aufweist, die durch eine Stromregelschleife erhalten wird.

11. System nach einem der Ansprüche 8 bis 10, **dadurch gekennzeichnet, dass** die Frequenzbetriebspunkte ($\omega$st_i) jeweils von einer gesonderten Frequenzstufe eines Frequenzprofils mit mehreren aufeinanderfolgenden Stufen definiert sind.

12. System nach einem der Ansprüche 8 bis 11, **dadurch gekennzeichnet, dass** die Frequenzbetriebspunkte ($\omega$st_i) jeweils auf einer linearen Frequenzvariationsrampe definiert sind.

13. System nach einem der Ansprüche 8 bis 12, **dadurch gekennzeichnet, dass** das Transfermodul eine Transferfunktion oder eine Zuordnungstabelle aufweist.

14. System nach einem der Ansprüche 8 bis 13, **dadurch gekennzeichnet, dass** das Identifikationsmodul dazu ausgebildet ist, auch Phasenverschiebungsdaten ($\phi$i) zu bestimmen, die für den Transfer repräsentativ sind, der vom Transformator durchführt wird.

**Claims**

1. Method for controlling an electric motor (M), implemented in a variable speed drive (SD), said variable speed drive (SD) being connected to the electric motor through a transformer (TR), which comprises a primary and a secondary, said primary of the transformer being connected to output phases of the variable speed drive and said secondary of the transformer being connected to said electric motor, consisting in:

- executing an identification sequence of the transformer (TR) for determining at least gain data (ki) representing a transfer performed by the transformer (TR);
- generating a transfer module (M4) based on said determined gain data;
- determining a start-up sequence of the electric motor (M) to be implemented by the variable speed drive (SD) by executing said transfer module (M4) on a reference current path,

**characterized in that** said identification sequence comprises:

- generating a voltage profile comprising a variable frequency, so as to define a plurality of successive frequency operating points ($\omega$st_i);
- for each frequency operating point ($\omega$st_i), a first measure of the current (Ip_i) and/or of the voltage (Vp_i) at the primary of the transformer and a second measure, respectively, of the current (Is_i) and/or of the voltage (Vs_i) at the secondary of the transformer;
- determining the gain between the primary and the secondary of the transformer for each frequency operating point.

2. Method according to Claim 1, **characterized in that** the voltage profile comprises a fixed amplitude.

3. Method according to Claim 1, **characterized in that** the voltage profile comprises a variable amplitude, obtained by a current control loop.

4. Method according to one of Claims 1 to 3, **characterized in that** the frequency operating points ($\omega$st_i) are each defined by a distinct frequency level of a frequency profile having a plurality of successive levels.

5. Method according to one of Claims 1 to 3, **characterized in that** the frequency operating points ($\omega$st_i) are each defined on a linear frequency variation ramp.

6. Method according to one of Claims 1 to 5, **characterized in that** generating the transfer module (M4) involves determining an inverse function of a transfer function of the transformer or creating a table of correspondence.

7. Method according to one of Claims 1 to 6, **characterized in that** said identification sequence is executed to also determine phase shift data ($\phi$i) repre-

senting the transfer performed by the transformer.

8. System for controlling an electric motor, said electric motor being controlled by a variable speed drive, said variable speed drive being connected to the electric motor through a transformer, which comprises a primary and a secondary, said primary of the transformer being connected to output phases of the variable speed drive and said secondary of the transformer being connected to said electric motor, said control system comprising a processing and control unit (UC) and also comprising:

   - an identification module (M1) of the transformer configured to be executed by the processing and control unit (UC) to determine gain data (ki) representing a transfer performed by the transformer;
   - an analysis module (M3) configured to generate a transfer module (M4) on the basis of said determined gain data (ki);
   - said transfer module (M4) being configured to be executed on a reference current path to determine a start-up sequence of the electric motor to be implemented by the variable speed drive,

   **characterized in that** the identification module (M1) also comprises:

   a module for generating a voltage profile comprising a variable frequency, so as to define a plurality of successive frequency operating points ($\omega st\_i$),
   a first acquisition module (M20), for each frequency operating point, for measuring the current and/or the voltage at the primary of the transformer, and
   a second acquisition module (M21), respectively, for measuring the current and/or the voltage at the secondary of the transformer,
   the analysis module (M3) being configured to determine a gain (ki) between the primary and the secondary of the transformer for each frequency operating point.

9. System according to Claim 8, **characterized in that** the voltage profile comprises a fixed amplitude.

10. System according to Claim 8, **characterized in that** the voltage profile comprises a variable amplitude, obtained by a current control loop.

11. System according to one of Claims 8 to 10, **characterized in that** the frequency operating points ($\omega st\_i$) are each defined by a distinct frequency level of a frequency profile having a plurality of successive levels.

12. System according to one of Claims 8 to 11, **characterized in that** the frequency operating points ($\omega st\_i$) are each defined on a linear frequency variation ramp.

13. System according to one of Claims 8 to 12, **characterized in that** the transfer module comprises a transfer function or a table of correspondence.

14. System according to one of Claims 8 to 13, **characterized in that** the identification module is configured to also determine phase shift data ($\varphi i$) representing the transfer performed by the transformer.

**Fig. 1**

**Fig. 2**

**Fig. 3A**

M10

$\omega st\_1$
$\omega st\_2$
$\omega st\_3$
$\omega st\_i$
$\omega st\_n$

LC → Vi → TR → M

| Courant primaire | Tension primaire |
|---|---|
| Ip_1 | Vp_1 |
| Ip_2 | Vp_2 |
| Ip_3 | Vp_3 |
| Ip_i | Vp_i |
| Ip_n | Vp_n |

| Courant secondaire | Tension secondaire |
|---|---|
| Is_1 | Vs_1 |
| Is_2 | Vs_2 |
| Is_3 | Vs_3 |
| Is_i | Vs_i |
| Is_n | Vs_n |

**Fig. 3B**

Ip_m

M11

Iref

M10

$\omega st\_1$
$\omega st\_2$
$\omega st\_3$
$\omega st\_i$
$\omega st\_n$

LC → Vi → TR → M

| Courant primaire | Tension primaire |
|---|---|
| Ip_1 | Vp_1 |
| Ip_2 | Vp_2 |
| Ip_3 | Vp_3 |
| Ip_i | Vp_i |
| Ip_n | Vp_n |

| Courant secondaire | Tension secondaire |
|---|---|
| Is_1 | Vs_1 |
| Is_2 | Vs_2 |
| Is_3 | Vs_3 |
| Is_i | Vs_i |
| Is_n | Vs_n |

**Fig. 3C**

Ip_m

Id_ref

Iq_ref

B1

Id_mes

Iq_mes

B2

Vd_ref

Vq_ref

B3

V1_ref

V2_ref

V3_ref

$\omega st$ → B4 → $\theta$

**Fig. 4**

| Courant primaire | Tension primaire | Courant secondaire | Tension secondaire |
|---|---|---|---|
| Ip_1 | Vp_1 | Is_1 | Vs_1 |
| Ip_2 | Vp_2 | Is_2 | Vs_2 |
| Ip_3 | Vp_3 | Is_3 | Vs_3 |
| Ip_i | Vp_i | Is_i | Vs_i |
| Ip_n | Vp_n | Is_n | Vs_n |

$\omega st\_1$
$\omega st\_2$
$\omega st\_3$
$\omega st\_i$
$\omega st\_n$

M4

M3

| Gain | Déphasage |
|---|---|
| k1 | $\varphi_1$ |
| k2 | $\varphi_2$ |
| k3 | $\varphi_3$ |
| ki | $\varphi_i$ |
| kn | $\varphi_n$ |

**Fig. 5**

M4

| Gain | Déphasage |
|---|---|
| k1 | $\varphi_1$ |
| k2 | $\varphi_2$ |
| k3 | $\varphi_3$ |
| ki | $\varphi_i$ |
| kn | $\varphi_n$ |

M6
Iref

M7
$\omega st\_ref$

LC

V1
V2
V3

TR

M

*Fig. 6A*

ωst

Temps

*Fig. 6B*

ωst

Temps

*Fig. 7A*

*Fig. 7B*

## Fig. 8A

## Fig. 8B

**EP 3 503 380 B1**

## RÉFÉRENCES CITÉES DANS LA DESCRIPTION

### Documents brevets cités dans la description

- EP 2963802 A1

- US 2015002059 A